# EUROPEAN PATENT APPLICATION

(11) **EP 4 752 012 A1**
(43) Date of publication of application: **03.06.2026**
(21) Application number: 25203752.8
(22) Date of filing: 22.09.2025
(51) Int. Cl.: B60S 5/04

(54) **INFLATION SYSTEM**

(30) Priority: 27.11.2024 US 202418963438
(71) Applicant: The Boeing Company, Arlington, VA 22202 (US)
(72) Inventor: GREENE, Dustin, Arlington (US); HOLDER, John M., Arlington (US)
(74) Representative: St Clair Jones, Gregory Arthur Langley

(57) **Abstract**

The present disclosure provides an inflation system for inflating inflatable objects, such as aircraft tires. The inflation system includes a flow sensor arranged to sense a flow rate of pressurized air supplied to an inflatable object by way of a supply path. The inflation system also includes a computing system. The computing system is configured to inflate, using feedback from the flow sensor, the inflatable object with a learned volume of pressurized air specific to the inflatable object.

## Description

### FIELD

Aspects of the present disclosure relate to inflation systems and techniques for inflating inflatable objects using such inflation systems.

### BACKGROUND

Automatic inflation systems, also called automatic inflators, can be used to inflate or deflate inflatable objects to a desired inflation pressure. For example, automatic inflation systems can be used to inflate tires. To fill a tire to a desired inflation pressure, automatic inflation systems typically use readings from a pressure sensor to perform iterative pressure checks as the tire is inflated. During a pressure check, the supply air is cut off and the pressure sensor is used to sense an actual inflation pressure of the pressurized air within the tire. The sensed actual inflation pressure is compared with the desired or target inflation pressure. When the actual inflation pressure does not match the target inflation pressure, the tire is further inflated, or in some instances, deflated. These pressure checks are typically done several times over the inflation process, which can be time consuming and thus a drag on inflation efficiency.

### SUMMARY

The present disclosure provides an inflation system in one aspect. The inflation system includes a flow sensor arranged to sense a flow rate of pressurized air supplied to an inflatable object by way of a supply path. The inflation system also includes a computing system configured to: inflate, using feedback from the flow sensor, the inflatable object with a learned volume of pressurized air specific to the inflatable object.

In one aspect, in combination with any example inflation system above or below, wherein in inflating, using feedback from the flow sensor, the inflatable object with the learned volume of pressurized air specific to the inflatable object, the computing system is configured to inflate the inflatable object with the learned volume of pressurized air in one shot without ceasing flow of the learned volume of pressurized air to the inflatable object.

In one aspect, in combination with any example inflation system above or below, wherein in inflating, using feedback from the flow sensor, the inflatable object with the learned volume of pressurized air specific to the inflatable object, the computing system is configured to inflate the inflatable object with the learned volume of pressurized air in one shot without performing any pressure checks in which an actual inflation pressure of air within the inflatable object is compared with a target inflation pressure.

In one aspect, in combination with any example inflation system above or below, the inflation system includes a pressure sensor arranged along the supply path, and wherein the computing system is further configured to: perform, after the inflating, a pressure check to compare an actual inflation pressure of the inflatable object with a target inflation pressure, the actual inflation pressure being sensed by the pressure sensor; and when the actual inflation pressure is not within a predefined range of the target inflation pressure, inflate or deflate the inflatable object so as to move the actual inflation pressure toward the target inflation pressure.

In one aspect, in combination with any example inflation system above or below, wherein the computing system is further configured to: iterate the performing and the inflating or deflating until the actual inflation pressure of air within the inflatable object is within a predefined range of the target inflation pressure.

In one aspect, in combination with any example inflation system above or below, the inflation system further includes a pressure sensor arranged along the supply path, and wherein the computing system is further configured to: perform, after the inflating, a pressure check to compare an actual inflation pressure of the inflatable object with a target inflation pressure, the actual inflation pressure being sensed by the pressure sensor; and set an alarm when the actual inflation pressure is not within a predetermined safety range of the target inflation pressure.

In one aspect, in combination with any example inflation system above or below, the inflation system further includes a pressure sensor arranged along the supply path, and wherein the computing system is further configured to: perform, prior to the inflating, a pressure check to determine whether a pressure of air within the inflatable object sensed by the pressure sensor exceeds a pressure threshold, wherein when the pressure of air within the inflatable object does not exceed the pressure threshold, the operation proceeds with the inflating.

In one aspect, in combination with any example inflation system above or below, wherein when the pressure of air within the inflatable object exceeds the pressure threshold, the computing system is further configured to: deflate the inflatable object; determine whether the pressure of air within the inflatable object exceeds the pressure threshold; and iterate the deflating and the determining until the pressure of air within the inflatable object does not exceed the pressure threshold.

In one aspect, in combination with any example inflation system above or below, wherein when the pressure of air within the inflatable object exceeds the pressure threshold, the computing system is further configured to: switch to, and use, an iterative pressure-check process to inflate the inflatable object.

In one aspect, in combination with any example inflation system above or below, wherein when the pressure of air within the inflatable object exceeds the pressure threshold, the computing system is further configured to: inflate, using feedback from the flow sensor, the inflatable object with a percentage of the learned volume of pressurized air specific to the inflatable object.

In one aspect, in combination with any example inflation system above or below, wherein when the pressure of air within the inflatable object exceeds the pressure threshold, the computing system is further configured to: perform at least one of the following based on a difference between the pressure of air within the inflatable object exceeds the pressure threshold: i) deflate the inflatable object; ii) switch to, and use, an iterative pressure-check process to inflate the inflatable object; or iii) inflate, using feedback from the flow sensor, the inflatable object with a percentage of the learned volume of pressurized air specific to the inflatable object.

In one aspect, in combination with any example inflation system above or below, the computing system is further configured to: identify one or more object identifiers associated with the inflatable object, and wherein the learned volume of pressurized air used to inflate the inflatable object is selected from a plurality of learned volumes stored in a library of learned volumes, with the library of learned volumes corresponding learned volumes with object identifiers.

In one aspect, in combination with any example inflation system above or below, wherein the inflatable object is an aircraft tire of a wheel assembly, and wherein the one or more object identifiers include part numbers of the aircraft tire and a wheel of the wheel assembly.

In one aspect, in combination with any example inflation system above or below, the inflatable object is an aircraft tire.

In one aspect, in combination with any example inflation system above or below, the computing system is further configured to: determine whether there is a learned volume of pressurized air specific to the inflatable object; and when there is not a learned volume of pressurized air specific to the inflatable object, inflate the inflatable object using a pressure-check process to learn a volume of pressurized air used to inflate the inflatable object to a target inflation pressure.

The present disclosure provides a (optionally non-transitory) computer-readable storage medium inflation system in another aspect. The (optionally non-transitory) computer-readable storage medium has program code embodied therewith, the program code executable by any combination of one or more processors of an inflation system to perform an operation. The operation includes: inflating, using feedback from a flow sensor, an inflatable object with a learned volume of pressurized air specific to the inflatable object; and performing, after the inflating, at least one pressure check to compare an actual inflation pressure of the inflatable object with a target inflation pressure.

In one aspect, in combination with any example (optionally non-transitory) computer-readable storage medium above or below, the inflating, using feedback from the flow sensor, the inflatable object with the learned volume of pressurized air specific to the inflatable object includes inflating the inflatable object with the learned volume of pressurized air in one shot without ceasing flow of the learned volume of pressurized air to the inflatable object.

In one aspect, in combination with any example (optionally non-transitory) computer-readable storage medium above or below, the inflatable object is an aircraft tire coupled with a wheel, and wherein the learned volume of pressurized air is specific to the aircraft tire and wheel.

The present disclosure provides a method of inflating an inflatable object in yet another aspect. The method includes inflating, using feedback from a flow sensor, an inflatable object with a learned volume of pressurized air specific to the inflatable object; and performing, after the inflating, at least one pressure check to compare an actual inflation pressure of the inflatable object with a target inflation pressure.

In one aspect, in combination with any example method above or below, the inflating, using feedback from the flow sensor, the inflatable object with the learned volume of pressurized air specific to the inflatable object includes inflating the inflatable object with the learned volume of pressurized air in one shot without ceasing flow of the learned volume of pressurized air to the inflatable object.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
FIG. 1 is a schematic view of an inflation system according to example aspects of the present disclosure.
FIG. 2 is a block diagram of a computing system for the inflation system of FIG. 1.
FIGS. 3, 4, and 5 provide a flow diagram for a method of inflating an inflatable object according to example aspects of the present disclosure.

### DETAILED DESCRIPTION

The present disclosure provides an inflation system arranged to inflate an inflatable object, such as an aircraft tire. In one aspect, an inflation system can "volume fill" or inflate an inflatable object using a learned volume of pressurized air specific to the inflatable object. The volume of pressurized air used to inflate an inflatable object can be specific to the inflatable object in that the fill volume can be learned specifically for that inflatable object, or inflatable object in combination with another component, based on past inflation processes. For instance, a fill volume can be learned for a specific aircraft tire and wheel combination. During a volume fill process, a flow sensor can be arranged along a supply path to monitor the flow rate of pressurized air supplied to the inflatable object, and based on the flow rate, the volume of pressurized air can be tracked. Hence, an inflatable object can be inflated by volume, or rather, using a learned volume specific to the inflatable object. By inflating an inflatable object by a "volume fill" process, the need for pressure checks can be eliminated or reduced, which can increase inflation efficiency, among other benefits.

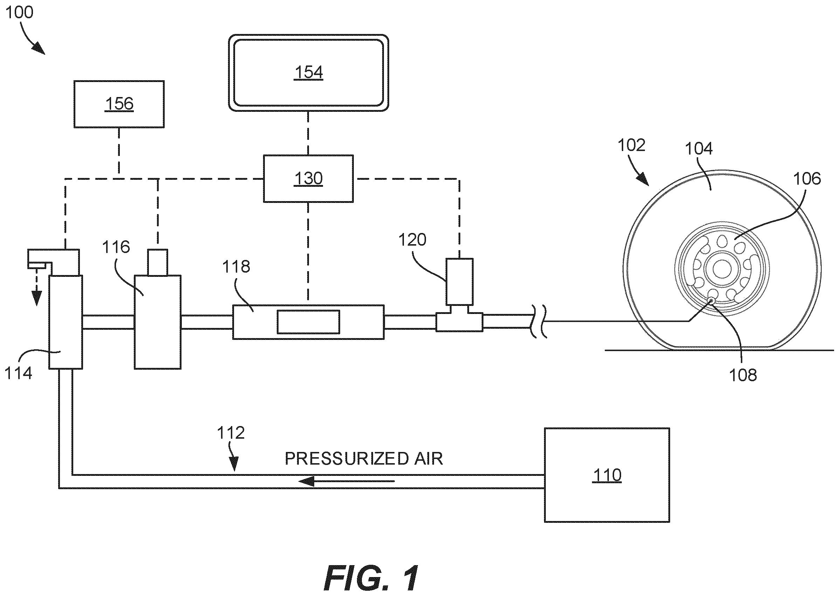

FIG. 1 is a schematic view of an automatic inflation system 100, according to an example aspect of the present disclosure. The inflation system 100 can be used to intelligently inflate an inflatable object to a desired or target inflation pressure. For instance, the inflation system 100 can be used to intelligently inflate an aircraft tire to a target inflation pressure. In FIG. 1, for example, a wheel assembly 102 is depicted, and the inflation system 100 is arranged to intelligently inflate a tire 104 of the wheel assembly 102 to a target inflation pressure. The wheel assembly 102 can include a wheel 106 to which the tire 104 is coupled. Pressurized air can flow into the tire 104 by way of a tire valve 108. Although the inflation system 100 of FIG. 1 is shown and described herein as an automatic inflation system for inflating tires for aircraft, the inventive aspects of the present disclosure can be utilized to intelligently inflate other inflatable objects, such as tires for other types of vehicles (e.g., heavy-duty trucks), among other possible inflatable objects.

As illustrated in FIG. 1, the inflation system 100 can include a pressurized air supply 110 that can store pressurized air, which can include primarily nitrogen, helium, some other gas, or a mixture of gases. A supply path 112 can allow for the pressurized air to flow downstream to the tire 104. The supply path 112 can be formed of one or more conduits, pipes, hoses, fittings, etc.

The inflation system 100 can also include a purge valve 114 and a control valve 116 arranged along the supply path 112. The control valve 116 can be positioned downstream of the purge valve 114 along the supply path 112, e.g., as shown in FIG. 1. The purge valve 114 can be controlled to relieve pressure upstream of the control valve 116, e.g., by relieving the pressure of the pressurized gas to atmosphere. The control valve 116, which can be a solenoid valve, can be selectively opened and closed to allow pressurized air to flow from the pressurized air supply 110 to the tire 104 along the supply path 112. When controlled to an open position, the control valve 116 can allow pressurized air to flow from the pressurized air supply 110 to the tire 104. When controlled to a closed position, the control valve 116 can prevent pressurized air from flowing from the pressurized air supply 110 to the tire 104.

The inflation system 100 can further include a flow sensor 118 positioned along the supply path 112. The flow sensor 118 can be arranged to measure a volume of pressurized air flowing therethrough over a period of time. In this way, the volume of pressurized air supplied to the tire 104 can be determined. In addition, the inflation system 100 can include a pressure sensor 120 (e.g., a pressure transducer) arranged along the supply path 112. The pressure sensor 120 can measure the pressure of the pressurized gas flowing along the supply path 112. As depicted in FIG. 1, the pressure sensor 120 can be arranged downstream of the flow sensor 118, as well as downstream of the control valve 116. When the control valve 116 is moved to the closed position, a pressure reading at the pressure sensor 120 can indicate a pressure of the air within the tire 104.

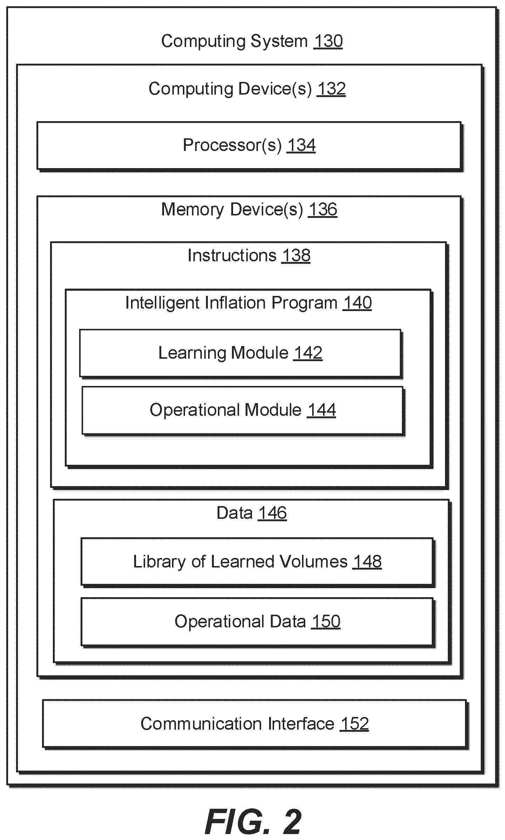

With reference now to FIGS. 1 and 2, the inflation system 100 can also include a computing system 130. The computing system 130 can include one or more processors 134 and one or more memory devices 136, which can be embodied in one or more computing devices 132. The one or more processors 134 can include any suitable processing device, such as a microprocessor, microcontroller, integrated circuit, logic device, or other suitable processing device. The one or more memory devices 136 can include one or more computer-readable medium, including, but not limited to, (optionally non-transitory) computer-readable medium, RAM, ROM, hard drives, flash drives, and other memory devices.

The one or more memory devices 136 can store information accessible by the one or more processors 134, including computer-readable instructions 138 that can be executed by the one or more processors 134. The instructions 138 can be any set of instructions, including an intelligent inflation program 140 that can be executed to intelligently and automatically inflate an inflatable object, such as an aircraft tire. The intelligent inflation program 140 can include a plurality of modules, including a learning module 142 and an operational module 144. When the instructions 138 are executed by the one or more processors 134, the one or more processors 134 can cause operations to be performed. For instance, when the intelligent inflation program 140 is executed by the one or more processors 134, the one or more processors can cause an inflation operation to be performed, e.g., to inflate an inflatable object using a learned volume of pressurized air, with the learned volume being specifically learned for the inflatable object. The instructions 138 can be software written in any suitable programming language or can be implemented in hardware.

The memory devices 136 can also store data 146 that can be accessed by the one or more processors 134. For example, the data 146 can include sensor data, model data, logic data, historical data, etc., as described herein. The data 146 can include one or more table(s), function(s), algorithm(s), model(s), equation(s), etc. according to example aspects of the present disclosure. In some aspects, the data 146 can include a library of learned volumes 148, which can correspond learned volumes of pressurized air with inflatable objects. In some aspects, the data 146 can include operational data 150, which can include, without limitation, rules, constraints, safety thresholds, etc. associated with the inflation system 100.

The computing system 130, or computing devices 132 thereof, can also include a communication interface 152 used to communicate, for example, with the other components of the inflation system 100. The communication interface 152 can include any suitable components for interfacing with other components, including for example, transmitters, receivers, transceivers, ports, controllers, antennas, or other suitable components. The computing system 130 can be communicatively coupled with various components of the inflation system 100, e.g., by one or more wired and/or wireless communication links.

In addition, referring again to FIG. 1, the inflation system 100 can also include a user interface 154, such as a touchscreen. The user interface 154 can enable a user to interact with the inflation system 100, such as by allowing a user to provide inputs (e.g., on the touchscreen, on a keyboard, on a mouse, by voice command, etc.), view data on a display screen, etc.

In some aspects, the inflation system 100 can include a scanner 156. The scanner 156 can be used to scan an object identifier (e.g., a part number) of the inflatable object, or rather, the tire 104 to be inflated. In addition, the scanner 156 can be used to scan for object identifiers of parts or components associated with the tire 104 or inflatable object, such as the wheel 106 upon which the tire 104 is mounted. The object identifiers of the tire 104 and the wheel 106 can be used by the computing system 130, e.g., to look up whether a learned volume of pressurized air is associated with the specific combination of tire and wheel. The computing system 130 can be communicatively coupled with the scanner 156 so that readings from the scanner 156 can be automatically fed to the computing system 130.

In some further aspects, the inflation system 100 can be mounted to a movable platform or vehicle. In this regard, the inflation system 100 can be a mobile system that can be conveniently moved from one place to another, such as one tire location to another.

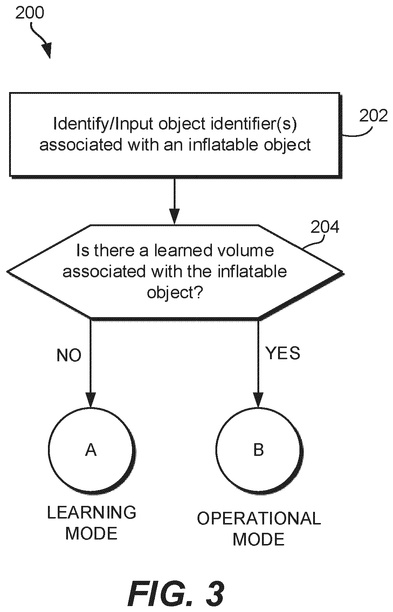

As noted above, the inflation system 100 can be used to intelligently inflate an inflatable object, such as the tire 104. An example manner in which the inflation system 100 can be used to intelligently inflate the tire 104 will be provided below with reference to FIG. 3.

FIGS. 3, 4, and 5 provide a flow diagram for a method 200 of intelligently inflating an inflatable object, such as an aircraft tire. The method 200 can be implemented using the automatic inflation system 100 of FIG. 1, and thus, FIGS. 1 and 2 will also be referenced below for additional context. However, the method 200 can be implemented by inflation systems having other configurations as well.

At 202, the method 200 can include identifying one or more object identifiers associated with an inflatable object. For instance, upon commencing an inflation operation, one or more object identifiers (e.g., part numbers, model numbers, serial numbers, etc.) associated with the inflatable object to be inflated can be identified and input into a computing system of an automatic inflation system. For example, with reference to FIG. 1, a user can identify a part number of the tire 104 to be inflated and can input the identified part number into the computing system 130 using the user interface 154. In some aspects, in addition to identifying and inputting the part number of the tire 104, a part number of the wheel 106 of the wheel assembly 102 can be identified and input into the computing system 130 via the user interface 154. Accordingly, in such aspects, a volume of pressurized air to inflate the tire to a target inflation pressure can be learned or selected that is specific to a tire/wheel combination. This is beneficial because different combinations of tires and wheels can have different pressurized air inflation volumes.

In yet other aspects, in addition or alternatively to a user identifying and inputting the object identifiers (e.g., part numbers) of the tire 104 and wheel 106 of the wheel assembly 102, the inflation system 100 can include a scanner 156 that automatically scans for part numbers and inputs them into the computing system 130.

At 204, the method 200 can include determining whether there is a learned volume of pressurized air associated with the inflatable object. For instance, the computing system 130 can determine whether there is a learned volume of pressurized air associated with the inflatable object using the object identifiers identified at 202. The computing system 130 can determine whether there is a learned volume of pressurized air for the combination of the part numbers for the tire 104 and wheel 106 of the wheel assembly 102, e.g., using a lookup table in the library of learned volumes 148.

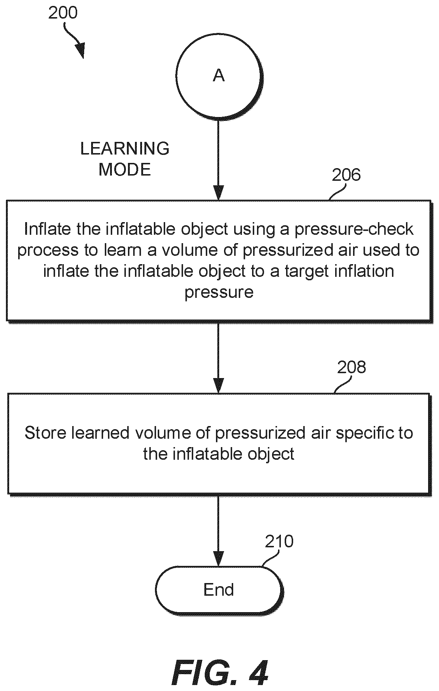

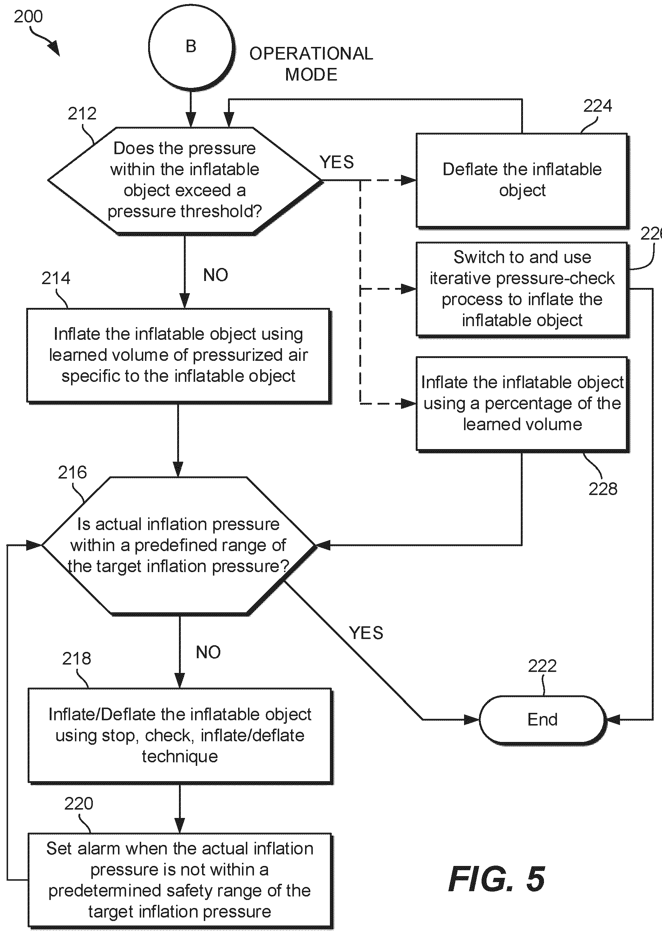

When the computing system 130 determines that there is not a learned volume of pressurized air associated with the inflatable object at 204, the inflation system 100 can operate in a learning mode to inflate the tire 104, and in doing so, learn a volume of pressurized air to inflate the tire 104 to a target inflation pressure. In this regard, the method 200 can proceed to operate in the learning mode depicted in FIG. 4. The one or more processors 134 of the computing system 130 can execute the learning module 142 of the intelligent inflation program 140 to operate in the learning mode. However, when the computing system 130 determines that there is indeed a learned volume of pressurized air associated with the inflatable object at 204, the inflation system 100 can operate in an operational mode to inflate the tire 104. Accordingly, the method 200 can proceed to operate in the operational mode depicted in FIG. 5. The one or more processors 134 of the computing system 130 can execute the operational module 144 of the intelligent inflation program 140 to operate in the operational mode.

In some aspects, the learned volume can not only be specific to the tire 104 or tire/wheel combination, but can also be specific to the inflation system 100 used to learn the volume of pressurized air associated with the tire 104 and/or tire/wheel combination. Accordingly, the library of learned volumes 148 can correspond learned volumes of pressurized air, which are learned by that specific inflation system, with inflatable objects. In yet other aspects, the library of learned volumes 148 can correspond learned volumes of pressurized air, which can be learned by the specific inflation system or by similarly configured inflation systems, with inflatable objects. Similarly configured inflation systems can be those of the same model, for example. In further aspects, the learned volumes in the library of learned volumes 148 can based on other similar tires or similar tire/wheel combinations (e.g., having the same models as the current tire/wheel).

### Learning Mode

The learning mode of FIG. 4 will now be further described.

At 206, as depicted in FIG. 4, the method 200 can include inflating the inflatable object to learn the volume of pressurized air supplied to inflate the inflatable object to a target inflation pressure. For instance, when the computing system 130 determines that there is not a learned volume of pressurized air associated with the inflatable object at 204 (FIG. 3), the computing system 130 can implement a baseline technique to inflate the tire 104 to the target inflation pressure so that a volume of pressurized air for inflating the tire 104 to the target inflation pressure can be learned.

In at least some example aspects, the baseline technique can be an iterative stop-and-check process, which includes: inflating/deflating the tire 104, stopping the flow of pressurized air to the tire 104, and, with the flow of pressurized air stopped from flowing to the tire 104, checking the actual inflation pressure of the tire 104. More specifically, to inflate the tire 104 using the stop-and-check process so that the volume of pressurized air to fill the tire 104 to the target inflation pressure can be learned, the computing system 130 can control the control valve 116 to move to an open position, which allows pressurized air to flow from the pressurized air supply 110 to the tire 104 along the supply path 112. As the pressurized air flows to the tire 104, the flow sensor 118 can sense the flow rate of the pressurized air supplied to the tire 104. Readings from the flow sensor 118 can be communicated to the computing system 130. During the inflation process using the stop-and-check process, the computing system 130 can iteratively perform checks on the actual inflation pressure of the pressurized air within the tire 104. To perform a pressure check, the computing system 130 can control the control valve 116 to move to a closed position so as to stop the flow of pressurized air to the tire 104. With the control valve 116 closed, feedback from the pressure sensor 120 indicating the actual pressure of the pressurized air within the tire 104 can be received by the computing system 130. The computing system 130 can then compare the actual inflation pressure of the pressurized air within the tire 104 with the target inflation pressure. A difference between the actual inflation pressure of the pressurized air within the tire 104 and the target inflation pressure can be determined by the computing system 130.

When the difference is not within a predefined range with respect to the target inflation pressure, the computing system 130 can either inflate or deflate the tire 104, depending on whether the actual inflation pressure is above or below the target inflation pressure, or rather, based on the sign of the difference between the actual inflation pressure and the target inflation pressure. To further inflate the tire 104, the computing system 130 can control the control valve 116 to move to the open position once again, which allows additional pressurized air to flow into the tire 104. As this occurs, the flow sensor 118 continues to monitor the flow rate of the pressurized air supplied to the tire 104, e.g., so that the total volume of pressurized air supplied to the tire 104 can be learned. The stop-and-check process can continue until the tire 104 is inflated to the target inflation pressure.

At 208, as depicted in FIG. 4, the method 200 can include storing the learned volume of pressurized air specific to the inflatable object. For instance, the volume of pressurized air supplied to inflate the tire 104 to the target inflation pressure at 206 can be stored in the library of learned volumes 148. This learned volume of pressurized air can be correlated in the library of learned volumes 148 to the tire 104 specifically and/or to the specific combination of the tire 104 and the wheel 106 of the wheel assembly 102. Accordingly, the next time the tire 104 of this specific tire/wheel combination requires inflation, the learned volume of pressurized air can be used to intelligently inflate the tire 104.

At 210, as depicted in FIG. 4, the method 200 can include ending the learning mode. In operating in the learning mode, the tire 104 has been inflated to the target inflation pressure and the volume of pressurized air used to inflate the tire 104 to the target inflation pressure has been learned and stored for future use.

### Operational Mode

The operational mode of FIG. 5 will now be further described. As noted above, when the computing system 130 determines that there is indeed a learned volume of pressurized air associated with the inflatable object at 204 (FIG. 3), the inflation system 100 can operate in an operational mode to inflate the tire 104.

At 212, as depicted in FIG. 5, the method 200 can include determining whether the pressure within the inflatable object exceeds a pressure threshold. Accordingly, at 212, a pressure check can be performed as a safety measure to ensure that the tire 104 is not pressurized above a pressure threshold (e.g., five pounds per square inch (5 psi)) before inflating the tire 104 with a learned volume of pressurized air at 214. In implementing the pressure check, the computing system 130 can control the control valve 116 to move to a closed position so that pressurized air does not flow from the pressurized air supply 110 to the tire 104. With the control valve 116 closed, feedback from the pressure sensor 120 indicating the actual pressure of the pressurized air within the tire 104 can be received by the computing system 130. The computing system 130 can compare the actual inflation pressure of the air within the tire 104 with a pressure threshold (e.g., five pounds per square inch (5 psi)).

When the pressure of the air within the tire 104 does not exceed the pressure threshold as determined at 212, the method 200 can proceed to 214 where the tire 104 can be inflated using a learned volume of pressurized air specific to the tire 104 or specific to the tire/wheel combination identified at 202 (FIG. 3). In contrast, when the pressure of the air within the tire 104 exceeds the pressure threshold as determined at 212, the method 200 can proceed to 224, 226, or 228.

At 214, as depicted in FIG. 5, the method 200 can include inflating, using feedback from the flow sensor, the inflatable object with a learned volume of pressurized air specific to the inflatable object. For instance, the computing system 130 can access the library of learned volumes 148 to look up the learned volume associated with the tire 104 or tire/wheel combination or can retrieve the learned volume from memory, e.g., if the learned volume associated with the tire 104 is stored in memory at 204. The computing system 130 can control the control valve 116 to move to an open position, which allows pressurized air to flow from the pressurized air supply 110 to the tire 104 along the supply path 112. As the pressurized air flows to the tire 104, the flow sensor 118 can sense the flow rate of the pressurized air supplied to the tire 104. Readings from the flow sensor 118 can be communicated to the computing system 130. The flow rate of the pressurized air flowing to the tire 104 can be tracked using the readings, and the computing system 130 can determine the volume of pressurized air supplied to the tire 104 based on the flow rate. In this way, the control valve 116 can be held open to allow the learned volume of pressurized air specific to the tire 104 (or the tire/wheel combination) to inflate the tire 104. Once the learned volume of pressurized air has been supplied to the tire 104, the computing system 130 can close the control valve 116 to stop the flow of pressurized air to the tire 104.

In some aspects, in inflating the tire 104 with the learned volume of pressurized air specific to the tire 104 at 216, the inflation with the learned volume can take place in "one shot" without ceasing the flow of the learned volume of pressurized air to the tire 104. The one shot volume fill can thus be performed without any pressure checks in which the actual inflation pressure of the air within the tire 104 is compared with the target inflation pressure. The "one shot" volume fill process can reduce inflation time compared to conventional techniques. In yet other aspects, in inflating the tire 104 with the learned volume of pressurized air specific to the tire 104 at 216, the inflation with the learned volume can take place in a plurality of shots (e.g., two shots). For instance, in filling by learned volume at 214, a first shot can be implemented to inflate the tire with a first volume of the learned volume, a pressure check can be performed, and then a second shot can be implemented to inflate the tire with a second volume of the learned volume. Accordingly, one or more pressure checks can be performed during a fill by learned volume process at 216.

At 216, as depicted in FIG. 5, the method 200 can include determining whether an actual inflation pressure of the air within the inflatable object is within a predefined range of a target inflation pressure. Such a determination can be made by performing, after the inflating at 214, a pressure check to compare the actual inflation pressure of the inflatable object, with the actual inflation pressure being sensed by the pressure sensor, with the target inflation pressure. For instance, after the tire 104 is inflated with the learned volume of pressurized air at 214, a pressure check can be performed to determine whether the actual inflation pressure of the air within the tire 104 is above, below, or at the target inflation pressure.

In some aspects, to perform the pressure check at 216, with the control valve 116 closed upon the learned volume of pressurized air being supplied to the tire 104, the computing system 130 can receive feedback from the pressure sensor 120 indicating the actual pressure of the pressurized air within the tire 104. The computing system 130 can then compare the actual inflation pressure of the pressurized air within the tire 104 with the target inflation pressure. A difference between the actual inflation pressure of the pressurized air within the tire 104 and the target inflation pressure can be determined by the computing system 130.

When the actual inflation pressure of the air within the tire 104 is not within the predefined range of the target inflation pressure (e.g., not within 2% of the target inflation pressure) as determined at 216, the method 200 can proceed with a stop-and-check process by iterating 216 and 218 until the target inflation pressure is achieved or is within a predefined range of the target inflation pressure. When the actual inflation pressure of the air within the tire 104 is within the predefined range of the target inflation pressure (e.g., within 2% of the target inflation pressure) as determined at 216, the method 200 can include ending the operational mode at 222.

At 218, as depicted in FIG. 5, the method 200 can include inflating or deflating the inflatable object so as to move the actual inflation pressure toward the target inflation pressure, when the actual inflation pressure is not within the predefined range of the target inflation pressure as determined at 216. For instance, when the actual inflation pressure is determined to be below the target inflation pressure of the tire 104 (by at least the predetermined range), the tire 104 can be inflated to increase the inflation pressure toward the target inflation pressure. The computing system 130 can control the control valve 116 to open for a predetermined time or so as to allow an additional volume of pressurized air to be supplied to the tire 104. When the actual inflation pressure is determined to be above the target inflation pressure of the tire 104 (by at least the predetermined range), the tire 104 can be deflated to decrease the inflation pressure toward the target inflation pressure. The computing system 130 can control the tire 104 to deflate, e.g., by any suitable technique. After inflating or deflating the tire 104 at 218, the method 200 can return to 216 for another pressure check. This process can iterate with 216 and 218 until the target inflation pressure is achieved or is within a predefined range of the target inflation pressure.

At 220, as depicted in FIG. 5, the method 200 can include setting an alarm when the actual inflation pressure is not within a predetermined safety range of the target inflation pressure. For instance, when the actual inflation pressure is not within the predefined range of the target inflation pressure as determined at 216, the method 200 can proceed 220 where a safety check can be performed. Performing the safety check can include determining whether the actual inflation pressure is within the predetermined safety range (e.g., 15%) of the target inflation pressure. This safety check can be performed a single time after the initial inflating by learned volume at 214 or can be performed each time after performing the pressure check at 216. When the actual inflation pressure is not within the predetermined safety range of the target inflation pressure as determined at 220, the computing system 130 can set the alarm indicating the same. In some aspects, the set alarm can be presented to a user, e.g., by way of the user interface 154 so as to draw a user's attention to the matter. The set alarm can also be used to set a flag associated with the learned volume. The flag can indicate that the learned volume may need to be recalculated before being used again, to suggest a user investigation, and/or may prevent the learned volume from being used again without user intervention or override.

At 222, as depicted in FIG. 5, the method 200 can include ending operation in the operational mode. In operating in the operational mode, the tire 104 has been inflated to the target inflation pressure, e.g., with a "single shot" by volume and then with a stop-and-check technique as needed.

As noted above, when the pressure of the air within the tire 104 exceeds the pressure threshold as determined at 212, the method 200 can proceed to 224, 226, or 228.

At 224, the method 200 can include deflating the inflatable object. For instance, when the computing system 130 determines that the pressure of the air within the tire 104 does not exceed the pressure threshold as determined at 212, the computing system 130 can cause the tire 104 to be deflated, e.g., by any suitable technique. After deflating the tire 104, e.g., for a predetermined period of time, the method 200 can return to 212 where the pressure of the air within the tire 104 can be checked once again against the pressure threshold. This process can iterate until the pressure of the air within the tire 104 does not exceed the pressure threshold (e.g., 5 psi). In this way, the tire 104 can be prepped to receive the learned volume of pressurized air at 214.

At 226, as a possible alternative to 224, the method 200 can include switching to a pressure-check process to inflate the inflatable object. For instance, when the computing system 130 determines that the pressure of the air within the tire 104 does not exceed the pressure threshold as determined at 212, the computing system 130 can cause the tire 104 to be inflated using a pressure-check process. The pressure-check process can be implemented at 226 in the same or similar manner as implemented at 206 (FIG. 4).

After inflating the tire 104 with the pressure-check process at 226, the method 200 can proceed to 222, where the volume fill process ends.

At 228, as a possible alternative to 224 and 226, the method 200 can include inflating, using feedback from the flow sensor, the inflatable object with a percentage of the learned volume of pressurized air specific to the inflatable object. In such aspects, the percentage is less than one hundred percent (100%). In at least some example aspects, the percentage can be determined based at least in part on a difference between an actual inflation pressure and the target inflation pressure. For instance, the actual inflation pressure of the air within the tire 104 as determined at 212 can be compared to the target inflation pressure, and a difference between the actual inflation pressure and the target inflation pressure can be determined. The percentage can be determined based on the determined difference. As one example, when the difference is relatively large (i.e., the actual inflation pressure is relatively far from the target inflation pressure), the percentage can be set at a relatively higher percentage value, such as eighty percent (80%). In this example, eighty percent (80%) of the learned fill volume would be supplied to the tire 104. When the difference is relatively small (i.e., the actual inflation pressure is relatively close to the target inflation pressure), the percentage can be set at a relatively lower percentage value, such as twenty percent (20%). In this example, twenty percent (20%) of the learned fill volume would be supplied to the tire 104. With the percentage determined, the tire 104 can be inflated with the determined percentage of the learned volume of pressurized air.

In such aspects, the fill volume can be determined based on the determined percentage at 228, as noted above, but because the inflation process is not linear, the percentage can be adjusted or otherwise set based on one or more safety constraints, thresholds, or scales that provide a margin of safety in the percentage volume fill process. For example, a safety constraint (e.g., retrieved from the operational data 150) can instruct that the determined percentage be reduced so that the pressure of the air within the tire 104 after the percentage volume fill process is not within a predetermined safety margin of the target inflation pressure, which ensures a level of safety given the nonlinearity of inflating an inflatable object.

After inflating the tire 104 with the determined percentage of the learned volume of pressurized air specific to the tire 104, the method 200 can proceed to 216 for a pressure check, and 216 and 218 can be iterated until the actual inflation pressure of the tire 104 is within the predefined range of the target inflation pressure. When the actual inflation pressure of the tire 104 is within the predefined range of the target inflation pressure, the method 200 can proceed to 222, where the volume fill process ends.

In some aspects, the method 200 can proceed to 224, 226, or 228 depending on the pressure of the air within the tire 104 as determined at 212. In at least one example, when the pressure of the air within the tire 104 as determined at 212 is within a predetermined range of the pressure threshold (e.g., relatively close to the pressure threshold, such as closer to the pressure threshold than the target inflation pressure), the method 200 can proceed to 224. In such examples, when the pressure of the air within the tire 104 as determined at 212 is within a predetermined range of the target inflation pressure (e.g., relatively close to the target inflation pressure, such as closer to the target inflation pressure than the pressure threshold), the method 200 can proceed to 226. In such examples, when the pressure of the air within the tire 104 as determined at 212 is within a predetermined range between the threshold pressure and the target inflation pressure (e.g., when the pressure of the air within the tire 104 as determined at 212 is within an interquartile range (25% to 75%), such as with the minimum being atmosphere and the maximum being the target inflation pressure), the method 200 can proceed to 228.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which includes one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

The description includes the following clauses:
1. An inflation system, comprising:
   a flow sensor arranged to sense a flow rate of pressurized air supplied to an inflatable object by way of a supply path; and
   a computing system configured to:
      inflate, using feedback from the flow sensor, the inflatable object with a learned volume of pressurized air specific to the inflatable object.
2. The inflation system of clause 1, wherein in inflating, using feedback from the flow sensor, the inflatable object with the learned volume of pressurized air specific to the inflatable object, the computing system is configured to inflate the inflatable object with the learned volume of pressurized air in one shot without ceasing flow of the learned volume of pressurized air to the inflatable object.
3. The inflation system of clause 1 or clause 2, wherein in inflating, using feedback from the flow sensor, the inflatable object with the learned volume of pressurized air specific to the inflatable object, the computing system is configured to inflate the inflatable object with the learned volume of pressurized air in one shot without performing any pressure checks in which an actual inflation pressure of air within the inflatable object is compared with a target inflation pressure.
4. The inflation system of any preceding clause, further comprising:
   a pressure sensor arranged along the supply path, and
   wherein the computing system is further configured to:
      perform, after the inflating, a pressure check to compare an actual inflation pressure of the inflatable object with a target inflation pressure, the actual inflation pressure being sensed by the pressure sensor; and
      when the actual inflation pressure is not within a predefined range of the target inflation pressure, inflate or deflate the inflatable object so as to move the actual inflation pressure toward the target inflation pressure.
5. The inflation system of clause 4, wherein the computing system is further configured to:
   iterate the performing and the inflating or deflating until the actual inflation pressure of air within the inflatable object is within a predefined range of the target inflation pressure.
6. The inflation system of any preceding clause, further comprising:
   a pressure sensor arranged along the supply path, and
   wherein the computing system is further configured to:
      perform, after the inflating, a pressure check to compare an actual inflation pressure of the inflatable object with a target inflation pressure, the actual inflation pressure being sensed by the pressure sensor; and
      set an alarm when the actual inflation pressure is not within a predetermined safety range of the target inflation pressure.
7. The inflation system of any preceding clause, further comprising:
   a pressure sensor arranged along the supply path, and
   wherein the computing system is further configured to:
      perform, prior to the inflating, a pressure check to determine whether a pressure of air within the inflatable object sensed by the pressure sensor exceeds a pressure threshold,
      wherein when the pressure of air within the inflatable object does not exceed the pressure threshold, the computing system proceeds with the inflating.
8. The inflation system of clause 7, wherein when the pressure of air within the inflatable object exceeds the pressure threshold, the computing system is further configured to:
   deflate the inflatable object;
   determine whether the pressure of air within the inflatable object exceeds the pressure threshold; and
   iterate the deflating and the determining until the pressure of air within the inflatable object does not exceed the pressure threshold.
9. The inflation system of clause 7 or clause 8, wherein when the pressure of air within the inflatable object exceeds the pressure threshold, the computing system is further configured to:
   switch to, and use, an iterative pressure-check process to inflate the inflatable object.
10. The inflation system of any of clauses 7 to 9, wherein when the pressure of air within the inflatable object exceeds the pressure threshold, the computing system is further configured to:
   inflate, using feedback from the flow sensor, the inflatable object with a percentage of the learned volume of pressurized air specific to the inflatable object.
11. The inflation system of any of clauses 7 to 10, wherein when the pressure of air within the inflatable object exceeds the pressure threshold, the computing system is further configured to:
   perform at least one of the following based on a difference between the pressure of air within the inflatable object exceeds the pressure threshold:
   i) deflate the inflatable object;
   ii) switch to, and use, an iterative pressure-check process to inflate the inflatable object; or
   iii) inflate, using feedback from the flow sensor, the inflatable object with a percentage of the learned volume of pressurized air specific to the inflatable object.
12. The inflation system of any preceding clause, wherein the computing system is further configured to:
   identify one or more object identifiers associated with the inflatable object, and
   wherein the learned volume of pressurized air used to inflate the inflatable object is selected from a plurality of learned volumes stored in a library of learned volumes, with the library of learned volumes corresponding learned volumes with object identifiers.
13. The inflation system of clause 12, wherein the inflatable object is an aircraft tire of a wheel assembly, and wherein the one or more object identifiers include part numbers of the aircraft tire and a wheel of the wheel assembly.
14. The inflation system of any preceding clause, wherein the inflatable object is an aircraft tire.
15. The inflation system of any preceding clause, wherein the computing system is further configured to:
   determine whether there is a learned volume of pressurized air specific to the inflatable object; and
   when there is not a learned volume of pressurized air specific to the inflatable object, inflate the inflatable object using a pressure-check process to learn a volume of pressurized air used to inflate the inflatable object to a target inflation pressure.
16. A (optionally non-transitory) computer-readable storage medium having program code embodied therewith, the program code executable by any combination of one or more processors of an inflation system to perform an operation, the operation comprising:
   inflating, using feedback from a flow sensor, an inflatable object with a learned volume of pressurized air specific to the inflatable object; and
   performing, after the inflating, at least one pressure check to compare an actual inflation pressure of the inflatable object with a target inflation pressure.
17. The (optionally non-transitory) computer-readable storage medium of clause 16, wherein the inflating, using feedback from the flow sensor, the inflatable object with the learned volume of pressurized air specific to the inflatable object comprises inflating the inflatable object with the learned volume of pressurized air in one shot without ceasing flow of the learned volume of pressurized air to the inflatable object.
18. The (optionally non-transitory) computer-readable storage medium of clause 16 or clause 17, wherein the inflatable object is an aircraft tire coupled with a wheel, and wherein the learned volume of pressurized air is specific to the aircraft tire and wheel.
   18A. A (optionally non-transitory) computer-readable storage medium having program code embodied therewith, the program code executable by any combination of one or more processors of an inflation system to perform the operations of the computer system of any of clauses 1 to 15.
19. A method, comprising:
   inflating, using feedback from a flow sensor, an inflatable object with a learned volume of pressurized air specific to the inflatable object; and
   performing, after the inflating, at least one pressure check to compare an actual inflation pressure of the inflatable object with a target inflation pressure.
20. The method of clause 19, wherein the inflating, using feedback from the flow sensor, the inflatable object with the learned volume of pressurized air specific to the inflatable object comprises inflating the inflatable object with the learned volume of pressurized air in one shot without ceasing flow of the learned volume of pressurized air to the inflatable object.
   20A. A method, comprising performing the operations of the computer system of any of clauses 1 to 15.

## Claims

1. An inflation system (100), comprising:
a flow sensor (118) arranged to sense a flow rate of pressurized air supplied to an inflatable object by way of a supply path (112); and
a computing system (130) configured to:
inflate, using feedback from the flow sensor (118), the inflatable object with a learned volume of pressurized air specific to the inflatable object.

2. The inflation system (100) of claim 1, wherein in inflating, using feedback from the flow sensor (118), the inflatable object with the learned volume of pressurized air specific to the inflatable object, the computing system (130) is configured to inflate the inflatable object with the learned volume of pressurized air in one shot without ceasing flow of the learned volume of pressurized air to the inflatable object.

3. The inflation system (100) of claim 1 or claim 2, wherein in inflating, using feedback from the flow sensor (118), the inflatable object with the learned volume of pressurized air specific to the inflatable object, the computing system (130) is configured to inflate the inflatable object with the learned volume of pressurized air in one shot without performing any pressure checks in which an actual inflation pressure of air within the inflatable object is compared with a target inflation pressure.

4. The inflation system (100) of any preceding claim, further comprising:
a pressure sensor (120) arranged along the supply path (112), and
wherein the computing system (130) is further configured to:
perform, after the inflating, a pressure check to compare an actual inflation pressure of the inflatable object with a target inflation pressure, the actual inflation pressure being sensed by the pressure sensor (120); and
when the actual inflation pressure is not within a predefined range of the target inflation pressure, inflate or deflate the inflatable object so as to move the actual inflation pressure toward the target inflation pressure.

5. The inflation system (100) of claim 4, wherein the computing system (130) is further configured to:
iterate the performing and the inflating or deflating until the actual inflation pressure of air within the inflatable object is within a predefined range of the target inflation pressure.

6. The inflation system (100) of any preceding claim, further comprising:
a pressure sensor (120) arranged along the supply path (112), and
wherein the computing system (130) is further configured to:
perform, after the inflating, a pressure check to compare an actual inflation pressure of the inflatable object with a target inflation pressure, the actual inflation pressure being sensed by the pressure sensor (120); and
set an alarm when the actual inflation pressure is not within a predetermined safety range of the target inflation pressure.

7. The inflation system (100) of any preceding claim, further comprising:
a pressure sensor (120) arranged along the supply path (112), and
wherein the computing system (130) is further configured to:
perform, prior to the inflating, a pressure check to determine whether a pressure of air within the inflatable object sensed by the pressure sensor (120) exceeds a pressure threshold,
wherein when the pressure of air within the inflatable object does not exceed the pressure threshold, the computing system (130) proceeds with the inflating.

8. The inflation system (100) of claim 7, wherein when the pressure of air within the inflatable object exceeds the pressure threshold, the computing system (130) is further configured to:
deflate the inflatable object;
determine whether the pressure of air within the inflatable object exceeds the pressure threshold; and
iterate the deflating and the determining until the pressure of air within the inflatable object does not exceed the pressure threshold.

9. The inflation system (100) of claim 7 or claim 8, wherein when the pressure of air within the inflatable object exceeds the pressure threshold, the computing system (130) is further configured to:
switch to, and use, an iterative pressure-check process to inflate the inflatable object.

10. The inflation system (100) of any of claims 7 to 9, wherein when the pressure of air within the inflatable object exceeds the pressure threshold, the computing system (130) is further configured to:
inflate, using feedback from the flow sensor (118), the inflatable object with a percentage of the learned volume of pressurized air specific to the inflatable object.

11. The inflation system (100) of any of claims 7 to 10, wherein when the pressure of air within the inflatable object exceeds the pressure threshold, the computing system (130) is further configured to:
perform at least one of the following based on a difference between the pressure of air within the inflatable object exceeds the pressure threshold:
i) deflate the inflatable object;
ii) switch to, and use, an iterative pressure-check process to inflate the inflatable object; or
iii) inflate, using feedback from the flow sensor (118), the inflatable object with a percentage of the learned volume of pressurized air specific to the inflatable object.

12. The inflation system (100) of any preceding claim, wherein the computing system (130) is further configured to:
identify one or more object identifiers associated with the inflatable object, and
wherein the learned volume of pressurized air used to inflate the inflatable object is selected from a plurality of learned volumes (148) stored in a library of learned volumes (148), with the library of learned volumes (148) corresponding learned volumes (148) with object identifiers, optionally,
wherein the inflatable object is an aircraft tire (104) of a wheel (106) assembly, and wherein the one or more object identifiers include part numbers of the aircraft tire (104) and a wheel (106) of the wheel (106) assembly.

13. The inflation system (100) of any preceding claim, wherein the inflatable object is an aircraft tire (104), and/or,
wherein the computing system (130) is further configured to:
determine whether there is a learned volume of pressurized air specific to the inflatable object; and
when there is not a learned volume of pressurized air specific to the inflatable object, inflate the inflatable object using a pressure-check process to learn a volume of pressurized air used to inflate the inflatable object to a target inflation pressure.

14. A computer-readable storage medium having program code embodied therewith, the program code executable by any combination of one or more processors (134) of an inflation system (100) to perform an operation, the operation comprising:
inflating, using feedback from a flow sensor (118), an inflatable object with a learned volume of pressurized air specific to the inflatable object; and
performing, after the inflating, at least one pressure check to compare an actual inflation pressure of the inflatable object with a target inflation pressure.

15. A method (200), comprising:
inflating, using feedback from a flow sensor (118), an inflatable object with a learned volume of pressurized air specific to the inflatable object; and
performing, after the inflating, at least one pressure check to compare an actual inflation pressure of the inflatable object with a target inflation pressure.
